# EUROPEAN PATENT SPECIFICATION

(11) **EP 3 834 799 B1**
(45) Date of publication and mention of the grant of the patent: **19.06.2024**
(21) Application number: 20212273.5
(22) Date of filing: 07.12.2020
(51) Int. Cl.: A61H 7/00, A61H 15/00, A61H 23/02, A61H 9/00

(54) **PRESSURE-SENSING TYPE MASSAGE CHAIR SYSTEM**
DRUCKEMPFINDLICHES MASSAGESESSELSYSTEM
SYSTÈME DE FAUTEUIL DE MASSAGE DE TYPE DÉTECTION DE PRESSION

(30) Priority: 10.12.2019 KR 20190164065
(43) Date of publication of application: 16.06.2021
(73) Proprietor: Bokjung Scale Corp., Seoul 04169 (KR)
(72) Inventor: SON, Beomsoo, 07004 Dongjak-gu (KR)
(74) Representative: Marks & Clerk LLP

(56) References cited:
- DE-A1-102017 216 410
- JP-A- 2013 063 162
- JP-B2- 4 703 304
- KR-A- 20190 124 171
- US-A1- 2018 199 716

## Description

### CROSS-REFERENCE TO RELATED APPLICATION(S)

This application claims priority to and the benefit of Korean Patent Application No. 10-2019-0164065, filed on December 10, 2019, in the Korean Intellectual Property Office.

### BACKGROUND

### 1. Field

The following description relates to a pressure-sensing type massage chair system, and more particularly, to a pressure-sensing type massage chair system capable of maximizing user convenience.

### 2. Description of Related Art

In general, a massage is an act of stimulating the body by using a person's hand or a massage machine, and normalizing the function of the body, alleviating fatigue, or enhancing health through such stimulation of the body.

In recent years, mechanical massage devices have been developed to perform a massage, and among such massage devices, massage chairs that allow a user to be seated comfortably thereon and receive a full-body massage are widely used.

Such massage chairs have very complex mechanical characteristics, such as having to give necessary stimuli to the whole body according to the user's preference, intention, physique, or the like, and communication with the user, that is, a command input method is very important. Conventionally, a simple command input method has been widely used, such as inputting commands by manually pressing a switch or a touch panel.

However, such a conventional switch input-based command input method requires a user to turn off or stop a massage device during a massage and then raise his/her upper body to operate a switch or a touch panel. Thus, it is very inconvenient to use and makes it difficult to input an appropriate command at each needed time, which causes problems, such as causing pain to the user or excessively massaging unnecessary areas.

In order to solve these problems of the conventional method, techniques for executing a command through voice recognition have been developed as disclosed in Korean Patent No. 1 0-1886627.

However, a massage chair of the conventional voice recognition method also requires a user to verbally speak the entire command containing a verbal word, such as "tap," "stop," or the like, an adjectival word, such as "painful," "refreshing," or the like, and an adverbial word, such as "strongly," "softly," or the like, as well as a place (an objective word) where a massage is to be given, such as hands, feet, back, or the like. Accordingly, a voice command itself is not simple and is very long, which causes a low speech recognition rate and low speed of speech recognition.

In addition, since the voice recognition method in which a user must only verbally input a command is not intuitive, it is cumbersome to use, and due to a lengthy command, command input time is increased.

DE102017216410 proposes a method for controlling the massage function of a seat, in particular a vehicle seat, wherein the seat has several massage elements which are distributed at least in some areas over a seat surface on the user side. Several pressure sensors are assigned to at least one of the massage elements in the seat surface on the user side and control of a massage function is carried out by locally increased pressurization of one of the pressure sensors by the seat user and by subsequent predetermined control commands from the seat user. Control of the massage function is carried out in relation to the selected at least one massage element.

JP2013063162A proposes a chair type massager that includes: massage balls serving as the treatment elements for massaging a body of the user; operation equipment serving as an operation part for specifying the operation of the massage balls by the user; and a control part for controlling the operation of the massage balls in accordance with the operation of the operation equipment. The operation equipment has a sensor for detecting at least one of the magnitude of an operating force which is the force acting on the operation equipment from outside and an operation direction which is a change direction of a position on which the operation force acts. The control part relatively adjusts at least one of the position of the massage balls and a pressing force which is the force for pressing the body by the massage balls based on time during which the operation force acts on or on the operation direction.

JP2007029192A proposes a massage machine composed of a seat part, a backrest part, and an armrest part, an operation panel where an input means is arranged is formed at the armrest part in addition to a normal remote controller. An instruction is given to the massage machine by the remote controller and the instruction is also given to the massage machine in the relaxed state without being accompanied by a large physical movement of the person to be treated even when the remote controller cannot be operated at hand since the input means is arranged at the armrest part.

US2018199716A1 proposes a seating/reclining furniture that includes at least one component selected from a seat part, a back part, a headrest, a footrest, and an armrest, an actuator which manipulates the at least one component, and a control device which controls the actuator. The control device includes a command recognition module and a command conversion module. The command recognition module checks at least one command pattern initiated by a user for a correspondence with at least one predefined command pattern which is representative of an actuation mode of the actuator. The command conversion module converts the command pattern into a control command for controlling the actuator based on the correspondence of the at least one command pattern to the at least one predefined command pattern.

KR20190124171A proposes a method and an apparatus for controlling a massage chair. The method for controlling a massage chair comprises: multimedia information extraction, action item detection and action item control. The time synchronization of multimedia effects and action items is possible based on analysis using a deep neural network model through a 5G network.

### SUMMARY

This summary is provided to introduce a selection of concepts in a simplified form that are further described below in the Detailed Description. This summary is not intended to identify key features or essential features of the claimed subject matter, nor is it intended to be used as an aid in determining the scope of the claimed subject matter.

An objective of the present invention is to solve or at least alleviate at least one of the above mentioned problems by providing a pressure-sensing type massage chair system in which a command is simply input in response to an intuitive action of a user, such as pressing a particular area where a massage is required using a pressure sensing unit, and this action may be associated with a voice recognition function so that even a very complex command can be very simply, briefly, and quickly input, which makes it possible to significantly increase a command recognition rate and to quickly detect the user's reaction or pain, thereby allowing the user to control an appropriate massage function very conveniently even during the massage.

According to the present invention, there is provided a pressure-sensing type massage chair system as set out in claim 1.

The pressure signals may be distinguished by any one or more of a position of a signal, a strength of a signal, an input time of a signal, a number of consecutive inputs of a signal, a combination of consecutive signals, and combinations thereof and the first command matching information may include information on any one or more of at least command information for each signal position that may correspond to the pressure signal, command information for each signal strength, command information for each signal input time, command information for each number of consecutive signal inputs, command information for each continuous signal combination, and combinations thereof.

The pressure-sensing type massage chair system may further include a microphone unit configured to detect a user's voice or sound made by the user; a second command signal output unit configured to receive a voice signal from the microphone unit and match the voice signal with pre-input second command matching information to output a second command signal corresponding to the second command matching information; and a command sentence information generating unit configured to combine the first command signal and the second command signal to generate command sentence information in which the first command signal is regarded as an objective contextual word and the second command signal is regarded as an operation command contextual word including any one or more of a verbal word, an adjectival word, an adverbial word, and combinations thereof, wherein the control unit may apply any one or more of at least a seat control signal for controlling the seat portion, a footrest control signal for controlling the footrest portion, a backrest control signal for controlling the backrest portion, an armrest control signal for controlling the armrest portions, a headrest control signal for controlling the headrest portion, and combinations thereof according to the command sentence information.

The pressure-sensing type massage chair system may further include a command input end time detecting unit configured to detect a command input end time, wherein the command input end time detected by the command end time detecting unit is a "body-ON-head-OFF" time point at which the pressure signal is generated in the pressure sensing unit installed in the headrest portion while the pressure signals are being generated in the pressure sensing units installed in the seat portion, the footrest portions, the backrest portion, and the armrest portions, or a simultaneous input point in time at which at least two or more of the pressure signals are simultaneously input.

The first command signal output unit may output a full-body massage command signal when at least two or more of the pressure signals are simultaneously generated.

The pressure sensing units may include any one or more of at least a first finger sensing unit corresponding to a first finger of the user, a second finger sensing unit corresponding to a second finger of the user, a third finger sensing unit corresponding to a third finger of the user, a fourth finger sensing unit, a fifth finger sensing unit, combinations thereof, and the first command signal output unit may output a forward command signal when a second finger signal or a third finger signal is sequentially input following a first finger signal, and may output a backward command signal when the second finger signal or the first finger signal is sequentially input following the third finger signal.

The first command signal output unit may output a first intensity command signal when some of at least a first finger signal, a second finger signal, and a third finger signal of the user's left hand and combinations thereof are simultaneously input, and may output a second intensity command signal when some of at least a first finger signal, a second finger signal, and a third finger signal of the user's right hand and combinations thereof are simultaneously input.

The control unit may apply a control signal for reclining the chair when a pressure signal is applied to all the pressure sensing units that are installed in the seat portion, the footrest portions, the backrest portion, the armrest portions, and the headrest portion, or when the pressure signal becomes strong.

The control unit may apply a control signal for standing the chair upright when a pressure signal is not applied to or is weakened in the pressure sensing unit installed in the backrest portion or the headrest portion while the pressure signals are being applied to the pressure sensing units installed in the seat portion, the footrest portions, and the armrest portions.

The pressure-sensing type massage chair system may further include a pain sensing unit configured to determine a moan signal, when applied from the microphone unit during a massage, as a pain signal, wherein the control unit may receive the pain signal from the pain sensing unit and apply a massage intensity control signal for adjusting an intensity of a massage.

Other features and aspects will be apparent from the following detailed description, the drawings, and the claims.

### BRIEF DESCRIPTION OF THE DRAWINGS

FIG. 1 is an exterior perspective view of a pressure-sensing type massage chair system according to some embodiments of the present invention.
FIG. 2 is a block diagram illustrating the pressure-sensing type massage chair system of FIG. 1.
FIG. 3 is a conceptual signal diagram illustrating an example of command input of the pressure-sensing type massage chair system of FIG. 1.
FIG. 4 is a conceptual signal diagram illustrating another example of command input of the pressure-sensing type massage chair system of FIG. 1.
FIG. 5 is a conceptual signal diagram illustrating still another example of command input of the pressure-sensing type massage chair system of FIG. 1.
FIG. 6 is a conceptual signal diagram illustrating yet another example of command input of the pressure-sensing type massage chair system of FIG. 1.
FIG. 7 is a conceptual signal diagram illustrating another example of command input of the pressure-sensing type massage chair system of FIG. 1.
FIG. 8 is a conceptual diagram illustrating an example of a pressure sensing unit of the pressure-sensing type massage chair system of FIG. 1.
FIG. 9 is a conceptual signal diagram illustrating an example of command input of the pressure sensing unit of the pressure-sensing type massage chair system of FIG. 8.
FIG. 10 is a conceptual signal diagram illustrating another example of command input of the pressure sensing unit of the pressure-sensing type massage chair system of FIG. 8.
FIG. 11 is a conceptual signal diagram illustrating still another example of command input of the pressure sensing unit of the pressure-sensing type massage chair system of FIG. 8.

Throughout the drawings and the detailed description, unless otherwise described, the same drawing reference numerals will be understood to refer to the same elements, features, and structures. The relative size and depiction of these elements may be exaggerated for clarity, illustration, and convenience.

### DETAILED DESCRIPTION

The invention is described more fully hereinafter with references to the accompanying drawings, in which exemplary embodiments of the invention are shown. This invention may, however, be embodied in many different forms and should not be construed as limited to the embodiments set forth herein. Rather, these exemplary embodiments are provided so that this disclosure is thorough, and will fully convey the scope of the invention to those skilled in the art. Throughout the drawings and the detailed description, unless otherwise described, the same drawing reference numerals are understood to refer to the same elements, features, and structures. The relative size and depiction of these elements may be exaggerated for clarity, illustration, and convenience.

The terms used in the present specification are merely used to describe particular embodiments, and are not intended to limit the present disclosure. As used herein, the singular forms "a," "an" and "the" are intended to include the plural forms as well, unless the context clearly indicates otherwise. It will be further understood that the terms "comprises" and/or "comprising," when used herein, specify the presence of stated features, integers, steps, operations, elements, and/or components, but do not preclude the presence or addition of one or more other features, integers, steps, operations, elements, components, and/or groups thereof.

Hereinafter, the embodiments of the present invention will be described with reference to the drawings which schematically illustrate the embodiments. In the drawings, for example, depending on a manufacturing technology and/or tolerance, modifications of illustrated shapes may be expected. Accordingly, it should be understood that the embodiments of the present disclosure are not limited to particular shapes in areas shown in the specification and may include, for example, changes in shape caused during a manufacturing process.

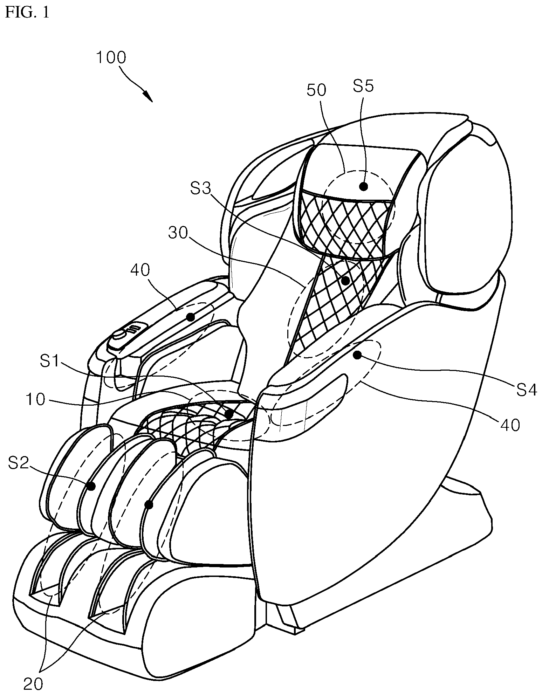

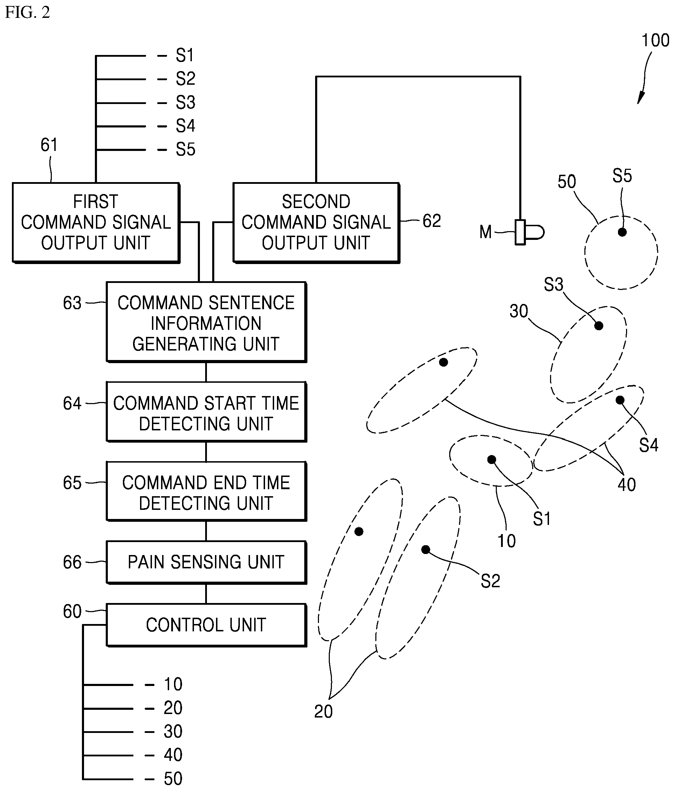

FIG. 1 is an exterior perspective view of a pressure-sensing type massage chair system 100 according to some embodiments of the present invention. FIG. 2 is a block diagram illustrating the pressure-sensing type massage chair system 100 of FIG. 1.

First, as shown in FIGS. 1 and 2, the pressure-sensing type massage chair system 100 according to some embodiments of the present invention may include mainly pressure sensing units S1, S2, S3, S4, and S5, a first command signal output unit 61, and a control unit 60.

For example, as shown in FIGS. 1 and 2, the pressure sensing units S1, S2, S3, S4, and S5, may be installed in any one or more of a seat portion 10, footrest portions 20, a backrest portion 30, armrest portions 40, a headrest portion 50, and combinations thereof, and may be a type of pressure detection sensor capable of detecting movement of one or more of at least the user's hips, feet, back, hands, head, and combinations thereof, or a change in the user's center of gravity.

More specifically, for example, as shown in FIGS. 1 and 2, the pressure sensing units S1, S2, S3, S4, and S5 may use all types of pressure detection sensors, such as pressure sensing pads, pressure sensing devices, and the like, which are capable of detecting a change in pressure greater than or equal to a predetermined pressure in a part of the above-described seat portion 10, the footrest portions 20, the backrest portion 30, the armrest portions 40, and the headrest portion 50, especially, in a specific part of the user.

In particular, the pressure sensing units S1, S2, S3, S4, and S5 may be pressure detection sensors that are located on portions to which message pressure does not apply, as well as on portions to which the massage pressure is applied. For example, in the case of the backrest portion 30, pressure detection sensors may be located at positions out of a massage range of a massage device that massages the user's back while moving along a back plate, that is, at positions corresponding to both shoulders, or the like.

Therefore, regardless of the massage pressure, when a pressure signal higher than or equal to a predetermined pressure is sensed by the pressure sensing units S1, S2, S3, S4, and S5, this may be recognized as a command.

However, the pressure sensing units S1, S2, S3, S4, and S5 are not necessarily limited to the above description or drawings, and, for example, a load measuring device capable of measuring a load installed in an air cylinder connected to an existing airbag or a drive motor that drives an existing message device may be applied. That is, a load may be measured and converted into pressure.

In addition, the device for measuring such pressure may use a wide variety of sensors, such as a contact type switch, a tension spring type or compression spring type pressure measurement sensor, and the like, which is installed in the above-described seat portion 10, the backrest portion 30, the armrest portions 40, the headrest portion 50, or the like.

In addition, for example, as shown in FIGS. 1 and 2, the pressure sensing units may be installed at various positions, wherein the pressure sensing unit S 1 is positioned corresponding to the seat portion 10, the pressure sensing unit S2 is positioned corresponding to the footrest portion 20, the pressure sensing unit S3 is positioned corresponding to the backrest portion 30, the pressure sensing unit S4 is positioned corresponding to the armrest portion 40, and the pressure sensing unit S5 is positioned corresponding to the headrest portion. However, the pressure sensing units are not necessarily limited to the drawings, and may be installed at various positions, such as a position corresponding to the shoulder or the waist.

In addition, for example, as shown in FIGS. 1 and 2, the first command signal output unit 61 may be a type of circuitry, software, a program, a microprocessor, a central processing unit, an operation unit, a control board, a control board, a computer, various electronic components, or a smart device that is capable of receiving pressure signals from the pressure sensing units S 1, S2, S3, S4, and S5 and matching the pressure signals with pre-input first command matching information to output a first command signal corresponding to the first command matching information.

In addition, for example, as shown in FIGS. 1 and 2, the control unit 60 may be a type of circuitry, software, a program, a microprocessor, a central processing unit, an operation unit, a control board, a control board, a computer, various electronic components, or a smart device that is capable of receiving the first command signal from the first command signal output unit 61 and applying at least any one of a seat control signal for controlling the seat unit 10, a footrest control signal for controlling the footrest portion 20, a backrest control signal for controlling the backrest portion 30, an armrest control signal for controlling the armrest portions 40, a headrest control signal for controlling the headrest portion 50, and combinations thereof.

Here, the seat portion 10, the footrest portions 20, the backrest portion 30, the armrest portions 40, the headrest portion 50, and the like may each include a unit that is provided with various driving devices capable of receiving various control signals from the control unit 60 and massaging the user's body, that is, an airbag, an air cylinder, a massage device, and a massage device drive motor, and the like, and is capable of performing an operation of tapping, stroking, or rubbing the user's hips, feet, back (shoulders), hands, head, neck, etc.

More specifically, for example, the driving devices may be configured using various linear movement devices. For example, the driving devices may be configured with a ball screw that generates a linear motion force by rotational motion, a servo motor that rotates the ball screw, a guide rail that guides the movement of a manage unit, and the like. Alternatively, various known linear motion devices, such as a linear motion device including a linear motor and a guide rail, or a linear motion device including a plurality of pulleys, a power transmission belt, and a motor, may be applied as the driving device.

In addition, all of a solenoid valve that vibrates a plurality of acupressure rollers or massage devices installed at the end of a movable bar and pressurizing the body back and forth, a pneumatic massage unit that pressurizes the body by injecting compressed air to an air bag or supplying air to an air pocket, and the like may be applied as the driving devices.

In the operation process of the pressure-sensing type massage chair system 100 according to some embodiments of the present invention, when the user is seated in the massage chair and applies a pressure change greater than or equal to a predetermined pressure on a specific part of the user by, for example, pushing a hand or foot with force, leaning back strongly, or laying his/her head further down, the pressure sensing units S1, S2, S3, S4, and S5 may generate pressure signals, the first command signal output unit 61 may receive the pressure signals and match the received pressure signals with the first command matching information to output a first command signal corresponding to the first command matching information, and the control unit 60 may applies a control signal so that an appropriate massage can be performed on a corresponding part in accordance with the first command signal.

More specifically, for example, the pressure signals may be distinguished by any one or more of a position of a signal, a strength of a signal, an input time of a signal, a number of consecutive inputs of a signal, a combination of consecutive signals, and combinations thereof. The first command matching information may include information on any one or more of at least command information for each signal position that may correspond to the pressure signal, command information for each signal strength, command information for each signal input time, command information for each number of consecutive signal inputs, command information for each continuous signal combination, and combinations thereof.

Thus, for example, even when the user who is seated in the massage chair and places his/her hand on the armrest portion 40 raises the hand twice in succession, the pressure sensing unit S4 may sense this motion and execute a command, such as "strongly massage the hand". On the contrary, even when the user who is seated in the massage chair and places his/her hand on the armrest portion 40 lowers the hand twice in succession, the pressure sensing unit S4 may sense this motion and execute a command, such as "softly massage the hand".

Accordingly, even without a voice recognition function, a command may be very simply input in response to an intuitive action of the user, such as pressing a particular area of the body where a massage is required using the pressure sensing unit S1, S2, S3, S4, or S5, and even a very complex command may be simply, briefly, and quickly input, which makes it possible to significantly increase a command recognition rate and to quickly detect the user's reaction or pain, thereby allowing the user to control an appropriate massage function very conveniently even during the massage.

On the other hand, the pressure-sensing type massage chair system 100 according to some embodiments of the present invention may have a voice recognition function to allow a more complex command to be accurately and quickly input. As shown in FIGS. 1 and 2, the pressure-sensing type massage chair system 100 according to some embodiments of the present invention may further include a microphone unit M, a second command signal output unit 62, and a command sentence information generating unit 63. The microphone M may detect a user's voice or sound made by the user, the second command signal output unit 62 may receive a voice signal from the microphone unit M and match the voice signal with pre-input second command matching information to output a second command signal corresponding to the second command matching information, and the command sentence information generating unit 63 may combine the first command signal and the second command signal to generate command sentence information in which the first command signal is regarded as an objective contextual word and the second command signal is regarded as an operation command contextual word including any one or more of a verbal word, an adjectival word, an adverbial word, and combinations thereof.

Here, the control unit 60 may apply any one or more of at least a seat control signal for controlling the seat portion 10, a footrest control signal for controlling the footrest portions 20, a backrest control signal for controlling the backrest portion 30, an armrest control signal for controlling the armrest portions 40, a headrest control signal for controlling the headrest portion 50, and combinations thereof according to the command sentence information.

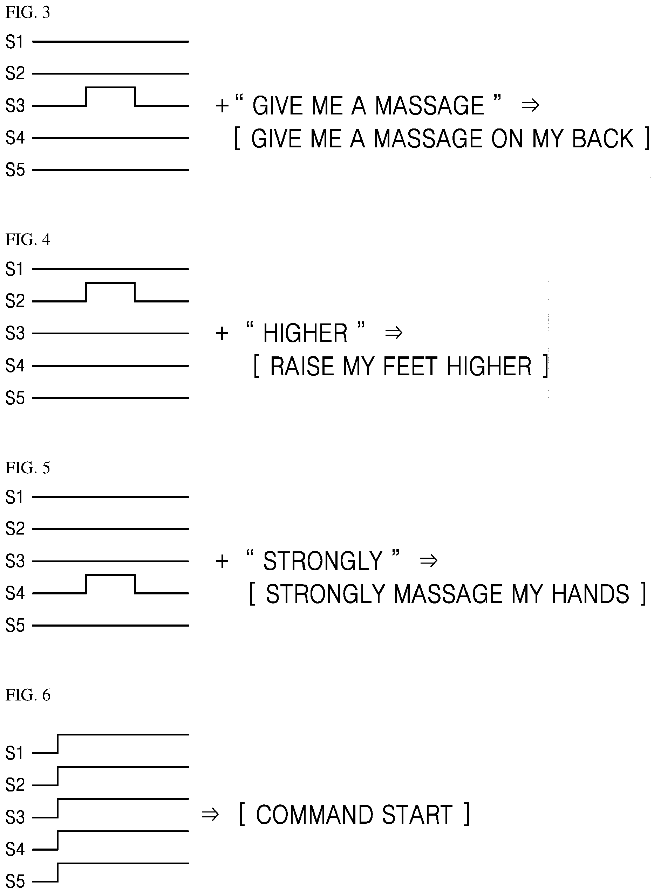

FIG. 3 is a conceptual diagram illustrating an example of command input of the pressure-sensing type massage chair system 100 of FIG. 1.

As shown in FIGS. 1 to 3, in the operation process of the pressure-sensing type massage chair system 100 according to some embodiments of the present invention, when the user is seated in the massage chair and then applies a pressure change greater than or equal to a predetermined pressure on his/her "back" by, for example, pushing his/her back with force, leaning back strongly or lying back, a pressure signal greater than or equal to a reference level is generated only in the pressure sensing unit S3 of FIG. 3, and if, at the same time or subsequently to the pressure signal, the user makes an utterance, such as "give me a massage," the microphone unit M may detect the utterance.

In this case, the first command signal output unit 61 may receive the pressure signal and match the pressure signal with pre-input first command matching information to output a first command signal corresponding to the first command matching information. The second command signal output unit 62 may match the voice signal with pre-input second command matching information to output a second command signal corresponding to the second command matching information.

Subsequently, the command sentence information generating unit 63 may combine the first command signal and the second command signal to finally generate command sentence information, such as "give me a massage on my back" in which the first command signal is regarded as an objective contextual word and the second command signal is regarded as at least a verbal word. The control unit 60 may apply the backrest control signal for controlling the backrest portion 30 according to the command sentence information. In addition, a very complex command sentence may be easily recognized and executed quickly through the combination of the pressure signal and the voice signal.

Therefore, it is possible to associate a very intuitive motion of the user, such as pressing a particular area of the body where a massage is required, with a voice recognition function, so that even a very complex command can be input very simply, briefly, and quickly, and thereby the command recognition rate may be significantly increased.

FIG. 4 is a conceptual signal diagram illustrating another example of command input of the pressure-sensing type massage chair system 100 of FIG. 1.

As shown in FIGS. 1 to 4, speech recognition is not necessarily limited to verbal words, and may also be applied to adjectival or adverbial words, such as "higher". When the user inputs a voice command, such as "higher," while a pressure signal is being input only to the pressure sensing unit S2, command sentence information, such as "raise my feet higher," may be generated.

FIG. 5 is a conceptual signal diagram illustrating another example of command input of the pressure-sensing type massage chair system 100 of FIG. 1.

As shown in FIGS. 1 to 5, speech recognition is not necessarily limited to verbal words, and may also be applied to adverbial words, such as "strongly". When the user inputs a voice command, such as "strongly," while a pressure signal is input only to the pressure sensing unit S4, command sentence information, such as "strongly massage my hands" may be generated.

Meanwhile, as shown in FIGS. 1 and 2, the pressure-sensing type massage chair system 100 according to some embodiments of the present invention may further include a command start time detecting unit 64 capable of detecting a command input start time and a command end time detecting unit 65 capable of detecting a command input end time.

Here, for example, the command input start time detected by the command start time detecting unit 64 may be a "body-ON-head-OFF" time point at which the pressure signal is not generated in the pressure sensing unit S5 installed in the headrest portion 50 while the pressure signals are being generated in the pressure sensing units S1, S2, S3, and S4 installed in the seat portion 10, the footrest portions 20, the backrest portion 30, and the armrest portions 40, or a simultaneous input point in time at which at least two or more of the pressure signals are simultaneously input.

In addition, for example, the command input end time detected by the command end time detecting unit 65 may be a "body-ON-head-OFF" time point at which the pressure signal is generated in the pressure sensing unit S5 installed in the headrest portion 50 while the pressure signals are being generated in the pressure sensing units S1, S2, S3, and S4 installed in the seat portion 10, the footrest portions 20, the backrest portion 30, and the armrest portions 40, or a simultaneous input point in time at which at least two or more of the pressure signals are simultaneously input.

For example, the first command signal output unit 61 may output a full-body massage command signal when at least two or more of the pressure signals are simultaneously generated.

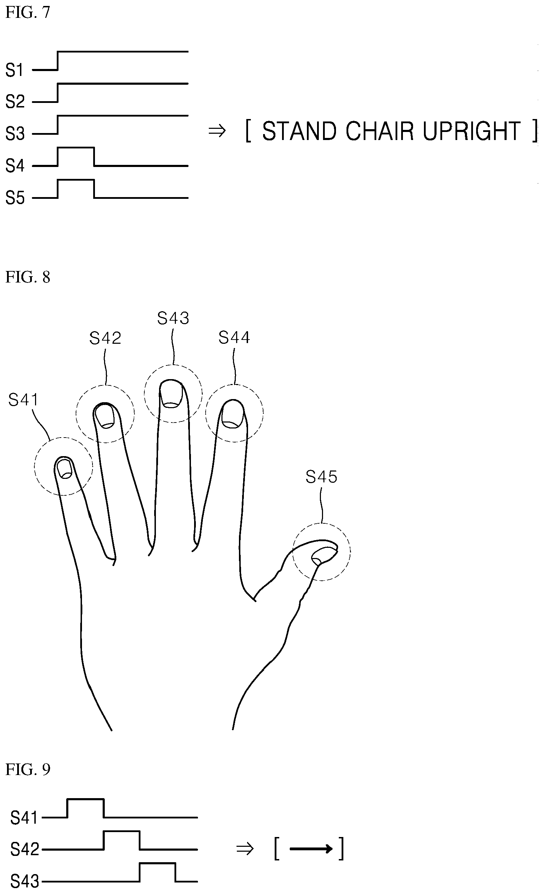

FIG. 6 is a conceptual signal diagram illustrating still another example of command input of the pressure-sensing type massage chair system 100 of FIG. 1, and FIG. 7 is a conceptual signal diagram illustrating yet another example of command input of the pressure-sensing type massage chair system 100 of FIG. 1.

For example, as shown in FIG. 6, when a pressure detection signal is input from all the pressure sensing units S1, S2, S3, S4, and S5, a signal for "command start" in a seated state is determined from these detection signals, so that a command input standby mode may be automatically executed.

In addition, the control unit 60 may apply a control signal for reclining the chair when a pressure signal is applied to all the pressure sensing units S1, S2, S3, S4, and S5 that are installed in the seat portion 10, the footrest portions 20, the backrest portion 30, the armrest portions 40, and the headrest portion 50, or when the pressure signal becomes strong.

Also, for example, as shown in FIG. 7, when the pressure detection signals are being input from all the pressure sensing units S1, S2, S3, S4, and S5 and the pressure detection signals disappear only in the pressure sensing units S4 and S5, this may be recognized as an action that the user intends to raise his/her body, so that a "chair-upright" function may be automatically activated. However, the combinations of various signals and combinations of commands are not necessarily limited to the drawings, and a wide variety of combinations may be reserved and be applied. The drawings are merely illustrative for ease of understanding of the present invention.

In addition, the control unit 60 may apply a control signal for standing the chair upright when a pressure signal is not applied to or is weakened in the pressure sensing unit S3 or S5 installed in the backrest portion 30 or the headrest portion 50 while the pressure signal are being applied to the pressure sensing units S1, S2, and S4 installed in the seat portion 10, the footrest portions 20, and the armrest portions 40.

Meanwhile, as shown in FIG. 2, the pressure-sensing type massage chair system 100 according to some embodiments of the present invention may further include a pain sensing unit 66 that determines a moan signal, when applied from the microphone unit M during a massage, as a pain signal.

Here, the controller 60 may receive the pain signal from the pain sensing unit 66 and apply a massage intensity control signal for adjusting the intensity of the massage.

Therefore, for example, when the user makes a moaning sound, such as "ah," "ouch," "yikes," or the like, during a massage, the pain sensing unit 66 may detect the moaning sound and perform a function of automatically weakening the intensity of the massage.

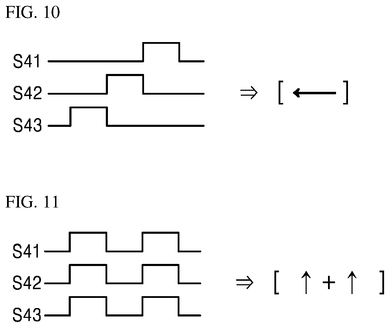

FIG. 8 is a conceptual diagram showing an example of a pressure sensing unit S4 of the pressure-sensing type massage chair system 100 of FIG. 1, and FIG. 9 is a conceptual signal diagram illustrating an example of command input of the pressure sensing unit S4 of the pressure-sensing type massage chair system 100 of FIG. 8, FIG. 10 is a conceptual signal diagram illustrating another example of command input of the pressure sensing unit S4 of the pressure-sensing type massage chair system 100 of FIG. 8, and FIG. 11 is a conceptual signal diagram illustrating still another example of command input of the pressure sensing unit S4 of the pressure-sensing type massage chair system 100 of FIG. 8.

More specifically, for example, as shown in FIGS. 1 to 8, the pressure sensing unit S4 of the pressure-sensing type massage chair system 100 of FIG. 1 includes any one or more of at least a first finger sensing unit S41 corresponding to a first finger of the user, a second finger sensing unit S42 corresponding to a second finger of the user, a third finger sensing unit S43 corresponding to a third finger of the user, a fourth finger sensing unit S44, a fifth finger sensing unit S45, and combinations thereof.

Accordingly, as shown in FIG. 9, when a second finger signal or a third finger signal is sequentially input following a first finger signal, the first command signal output unit 61 may output, for example, a forward command signal ("->") directed from the left to the right.

On the contrary, as shown in FIG. 10, when the second finger signal or the first finger signal is sequentially input following the third finger signal, the first command signal output unit 61 may output, for example, a backward command signal ("<-") directed from the right to the left. Here, it should be noted that such a directional signal may be generated from two finger signals or four or more finger signals.

In addition, as shown in FIG. 11, when some of at least a first finger signal, a second finger signal, and a third finger signal of the user's left hand and combinations thereof are simultaneously input, the first command signal output unit 61 may output a first intensity command signal, and when some of at least a first finger signal, a second finger signal, and a third finger signal of the user's right hand and combinations thereof are simultaneously input, the first command signal output unit 61 may output a second intensity command signal. In the drawings, it is illustrated that pressing twice with three fingers is determined as a command signal for increasing the intensity, but the present invention is not limited thereto, and all combinations of various forms and types of signals may be applicable.

According to various embodiments of the present invention made as described above, a command may be very simply input in response to an intuitive action of the user, such as pressing a particular area of the body where a massage is required using the pressure sensing unit, and this action may be associated with a voice recognition function so that even a very complex command can be very simply, briefly, and quickly input, which makes it possible to significantly increase the command recognition rate and to quickly detect the user's reaction or pain, thereby allowing the user to control an appropriate massage function very conveniently even during the massage. However, the scope of the present invention is not limited by the effect.

A number of examples have been described above. Nevertheless, it will be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

### REFERENCE NUMERALS

10: SEAT PORTION
20: FOOTREST PORTION
30: BACKREST PORTION
40: ARMREST PORTION
50: HEADREST PORTION
S1, S2, S3, S4, S5: PRESSURE SENSING UNIT
M: MICROPHONE UNIT
60: CONTROL UNIT
61: FIRST COMMAND SIGNAL OUTPUT UNIT
62: SECOND COMMAND SIGNAL OUTPUT UNIT
63: COMMAND SENTENCE INFORMATION GENERATING UNIT
64: COMMAND START TIME DETECTING UNIT
S41: FIRST FINGER SENSING UNIT
S42: SECOND FINGER SENSING UNIT
S43: THIRD FINGER SENSING UNIT
65: COMMAND END TIME DETECTING UNIT
66: PAIN SENSING UNIT
100: PRESSURE-SENSING TYPE MASSAGE CHAIR SYSTEM

## Claims

1. A pressure-sensing type massage chair system comprising:
pressure sensing units (S1, S2, S3, S4, S5) installed in any one or more of at least a seat portion (10), footrest portions (20), a backrest portion (30), armrest portions (40), a headrest portion (50), and combinations thereof and configured to detect movement of any one or more of at least user's hips, feet, back, hands, head, and combinations thereof, or a change in a user's center of gravity;
a first command signal output unit (61) configured to receive pressure signals from the pressure sensing unit (S1, S2, S3, S4, S5) and match the received pressure signals with pre-input first command matching information to output a first command signal corresponding to the first command matching information;
a control unit (60) configured to receive the first command signal from the first command signal output unit (61) and apply any one or more of at least a seat control signal for controlling the seat portion (10), a footrest control signal for controlling the footrest portion (20), a backrest control signal for controlling the backrest portion (30), an armrest control signal for controlling the armrest portions (40), a headrest control signal for controlling the headrest portion (50), and combinations thereof; **characterised in that** the system is further comprising
a command start time detecting unit (64) configured to detect a command input start time, wherein the command input start time detected by the command start time detecting unit (64) is a "body-ON-head-OFF" time point at which the pressure signal is not generated in the pressure sensing unit (S5) installed in the headrest portion (50) while the pressure signals are being generated in the pressure sensing units (S1, S2, S3, S4) installed in the seat portion (10), the footrest portions (20), the backrest portion (30), and the armrest portions (40), or the command input start time detected by the command start time detecting unit is a simultaneous input point in time at which at least two or more of the pressure signals are simultaneously input.

2. The pressure-sensing type massage chair system of claim 1, wherein the pressure signals is distinguished by any one or more of a position of a signal, a strength of a signal, an input time of a signal, a number of consecutive inputs of a signal, a combination of consecutive signals, and combinations thereof and the first command matching information comprises information on any one or more of at least command information for each signal position that may correspond to the pressure signal, command information for each signal strength, command information for each signal input time, command information for each number of consecutive signal inputs, command information for each continuous signal combination, and combinations thereof.

3. The pressure-sensing type massage chair system of claim 1, further comprising:
a microphone unit (M) configured to detect a user's voice or sound made by the user;
a second command signal output unit (62) configured to receive a voice signal from the microphone unit (M) and match the voice signal with pre-input second command matching information to output a second command signal corresponding to the second command matching information; and
a command sentence information generating unit (63) configured to combine the first command signal and the second command signal to generate command sentence information in which the first command signal is regarded as an objective contextual word and the second command signal is regarded as an operation command contextual word including any one or more of a verbal word, an adjectival word, an adverbial word, and combinations thereof,
wherein the control unit (60) is configured to apply any one or more of at least a seat control signal for controlling the seat portion (10), a footrest control signal for controlling the footrest portion (20), a backrest control signal for controlling the backrest portion (30), an armrest control signal for controlling the armrest portions (40), a headrest control signal for controlling the headrest portion (50), and combinations thereof according to the command sentence information.

4. The pressure-sensing type massage chair system of claim 1, further comprising a command input end time detecting unit (65) configured to detect a command input end time,
wherein the command input end time detected by the command end time detecting unit (65) is a "body-ON-head-OFF" time point at which the pressure signal is generated in the pressure sensing unit (S5) installed in the headrest portion (50) while the pressure signals are being generated in the pressure sensing units (S1, S2, S3, S4) installed in the seat portion (10), the footrest portions (20), the backrest portion (30), and the armrest portions (40), or a simultaneous input point in time at which at least two or more of the pressure signals are simultaneously input.

5. The pressure-sensing type massage chair system of claim 1, wherein the first command signal output unit (61) is configured to output a full-body massage command signal when at least two or more of the pressure signals are simultaneously generated.

6. The pressure-sensing type massage chair system of claim 1, wherein the pressure sensing units (S1, S2, S3, S4, S5) comprise any one or more of at least a first finger sensing unit (S41) corresponding to a first finger of the user, a second finger sensing unit (S42) corresponding to a second finger of the user, a third finger sensing unit (S43) corresponding to a third finger of the user, a fourth finger sensing unit, a fifth finger sensing unit, combinations thereof, and the first command signal output unit (61) is configured to output a forward command signal when a second finger signal or a third finger signal is sequentially input following a first finger signal, and output a backward command signal when the second finger signal or the first finger signal is sequentially input following the third finger signal.

7. The pressure-sensing type massage chair system of claim 6, wherein the first command signal output unit (61) is configured to output a first intensity command signal when some of at least a first finger signal, a second finger signal, and a third finger signal of the user's left hand and combinations thereof are simultaneously input, and output a second intensity command signal when some of at least a first finger signal, a second finger signal, and a third finger signal of the user's right hand and combinations thereof are simultaneously input.

8. The pressure-sensing type massage chair system of claim 1, wherein the control unit (60) is configured to apply a control signal for reclining the chair when a pressure signal is applied to all the pressure sensing units (S1, S2, S3, S4, S5) that are installed in the seat portion (10), the footrest portions (20), the backrest portion (30), the armrest portions (40), and the headrest portion (50), or when the pressure signal becomes strong.

9. The pressure-sensing type massage chair system of claim 1, wherein the control unit (60) is configured to apply a control signal for standing the chair upright when a pressure signal is not applied to or is weakened in the pressure sensing unit (S3, S5) installed in the backrest portion (30) or the headrest portion (50) while the pressure signals are being applied to the pressure sensing units (S1, S2, S4) installed in the seat portion (10), the footrest portions, (20) and the armrest portions (40).

10. The pressure-sensing type massage chair system of claim 3, further comprising a pain sensing unit (66) configured to determine a moan signal, when applied from the microphone unit during a massage, as a pain signal,
wherein the control unit (60) is configured to receive the pain signal from the pain sensing unit (66) and apply a massage intensity control signal for adjusting an intensity of a massage.

## Patentansprüche

1. Massagesesselsystem eines druckempfindlichen Typs, das Folgendes umfasst:
Drucksensoreinheiten (S1, S2, S3, S4, S5), die in einem oder mehreren beliebigen von mindestens einem Sitzteil (10), Fußstützenteilen (20), einem Rückenlehnenteil (30), Armlehnenteilen (40), einem Kopfstützenteil (50) und Kombinationen davon installiert und zum Erkennen einer Bewegung von einem beliebigen oder mehreren von mindestens den Hüften, Füßen, dem Rücken, den Händen, dem Kopf eines Benutzers und Kombinationen davon oder einer Änderung des Schwerpunkts eines Benutzers konfiguriert sind;
eine erste Befehlssignalausgabeeinheit (61), die zum Empfangen von Drucksignalen von der Drucksensoreinheit (S1, S2, S3, S4, S5) und Abgleichen der empfangenen Drucksignale mit zuvor eingegebenen ersten Befehlsabgleichsinformationen konfiguriert ist, um ein erstes Befehlssignal entsprechend den ersten Befehlsabgleichsinformationen auszugeben;
eine Steuereinheit (60), die zum Empfangen des ersten Befehlssignals von der ersten Befehlssignalausgabeeinheit (61) und Anlegen von einem beliebigen oder mehreren von mindestens einem Sitzsteuersignal zum Steuern des Sitzteils (10), einem Fußstützensteuersignal zum Steuern des Fußstützenteils (20), einem Rückenlehnensteuersignal zum Steuern des Rückenlehnenteils (30), einem Armlehnensteuersignal zum Steuern der Armlehnenteile (40), einem Kopfstützensteuersignal zum Steuern des Kopfstützenteils (50) und Kombinationen davon konfiguriert ist;
**dadurch gekennzeichnet, dass** das System ferner Folgendes umfasst:
eine Befehlsstartzeit-Erkennungseinheit (64), die zum Erkennen einer Befehlseingabe-Startzeit konfiguriert ist, wobei die von der Befehlsstartzeit-Erkennungseinheit (64) erkannte Befehlseingabe-Startzeit ein "Körper-EIN-Kopf-AUS"-Zeitpunkt ist, zu dem das Drucksignal in der im Kopfstützenteil (50) installierten Drucksensoreinheit (S5) nicht erzeugt wird, während die Drucksignale in den in dem Sitzteil (10), den Fußstützenteilen (20), dem Rückenlehnenteil (30) und den Armlehnenteilen (40) installierten Drucksensoreinheiten (S1, S2, S3, S4) erzeugt werden, oder die von der Befehlsstartzeit-Erkennungseinheit erkannte Befehlseingabe-Startzeit ein gleichzeitiger Eingabezeitpunkt ist, zu dem mindestens zwei oder mehr der Drucksignale gleichzeitig eingegeben werden.

2. Massagesesselsystem eines druckempfindlichen Typs nach Anspruch 1, wobei sich die Drucksignale durch eine beliebige oder mehrere aus einer Position eines Signals, einer Stärke eines Signals, einer Eingabezeit eines Signals, einer Anzahl von aufeinanderfolgenden Eingaben eines Signals, einer Kombination von aufeinanderfolgenden Signalen und Kombinationen davon unterscheiden, und die ersten Befehlsabgleichsinformationen Informationen über eine beliebige oder mehrere von mindestens Befehlsinformationen für jede Signalposition, die dem Drucksignal entsprechen kann, Befehlsinformationen für jede Signalstärke, Befehlsinformationen für jede Signaleingangszeit, Befehlsinformationen für jede Anzahl von aufeinanderfolgenden Signaleingängen, Befehlsinformationen für jede kontinuierliche Signalkombination und Kombinationen davon umfassen.

3. Massagesesselsystem eines druckempfindlichen Typs nach Anspruch 1, das ferner Folgendes umfasst:
eine Mikrofoneinheit (M), die zum Erkennen der Stimme eines Benutzers oder vom Benutzer erzeugter Geräusche konfiguriert ist;
eine zweite Befehlssignalausgabeeinheit (62), die zum Empfangen eines Sprachsignals von der Mikrofoneinheit (M) und Abgleichen des Sprachsignals mit zuvor eingegebenen zweiten Befehlsabgleichsinformationen konfiguriert ist, um ein zweites Befehlssignal entsprechend den zweiten Befehlsabgleichsinformationen auszugeben; und
eine Befehlssatz-Informationserzeugungseinheit (63), die zum Kombinieren des ersten Befehlssignals und des zweiten Befehlssignals konfiguriert ist, um Befehlssatzinformationen zu erzeugen, bei denen das erste Befehlssignal als ein objektives kontextbezogenes Wort und das zweite Befehlssignal als ein kontextbezogenes Betriebsbefehlswort betrachtet wird, das ein beliebiges oder mehrere von einem verbalen Wort, einem adjektivischen Wort, einem adverbialen Wort und Kombinationen davon einschließt,
wobei die Steuereinheit (60) zum Anlegen eines beliebigen oder mehrerer von mindestens einem Sitzsteuersignal zum Steuern des Sitzteils (10), einem Fußstützensteuersignal zum Steuern des Fußstützenteils (20), einem Rückenlehnensteuersignal zum Steuern des Rückenlehnenteils (30), einem Armlehnensteuersignal zum Steuern der Armlehnenteile (40), einem Kopfstützensteuersignal zum Steuern des Kopfstützenteils (50) und Kombinationen davon gemäß den Befehlssatzinformationen konfiguriert ist.

4. Massagesesselsystem eines druckempfindlichen Typs nach Anspruch 1, das ferner eine Befehlseingabeendzeit-Erkennungseinheit (65) umfasst, die zum Erkennen einer Befehlseingabe-Endzeit konfiguriert ist,
wobei die von der Befehlsendzeit-Erkennungseinheit (65) erkannte Befehlseingabe-Endzeit ein "Körper-EIN-Kopf-AUS"-Zeitpunkt, zu dem das Drucksignal in der im Kopfstützenteil (50) installierten Drucksensoreinheit (S5) erzeugt wird, während die Drucksignale in den in dem Sitzteil (10), den Fußstützenteilen (20), dem Rückenlehnenteil (30) und den Armlehnenteilen (40) installierten Drucksensoreinheiten (S1, S2, S3, S4) erzeugt werden, oder ein gleichzeitiger Eingabezeitpunkt ist, zu dem mindestens zwei oder mehr der Drucksignale gleichzeitig eingegeben werden.

5. Massagesesselsystem eines druckempfindlichen Typs nach Anspruch 1, wobei die erste Befehlssignalausgabeeinheit (61) zum Ausgeben eines Ganzkörpermassage-Befehlssignals konfiguriert ist, wenn mindestens zwei oder mehr der Drucksignale gleichzeitig erzeugt werden.

6. Massagesesselsystem eines druckempfindlichen Typs nach Anspruch 1, wobei die Drucksensoreinheiten (S1, S2, S3, S4, S5) eines oder mehrere beliebige von mindestens einer ersten Fingersensoreinheit (S41) entsprechend einem ersten Finger des Benutzers, einer zweiten Fingersensoreinheit (S42) entsprechend einem zweiten Finger des Benutzers, einer dritten Fingersensoreinheit (S43) entsprechend einem dritten Finger des Benutzers, einer vierten Fingersensoreinheit, einer fünften Fingersensoreinheit, Kombinationen davon umfasst, und die erste Befehlssignalausgabeeinheit (61) zum Ausgeben eines Vorwärtsbefehlssignals, wenn ein zweites Fingersignal oder ein drittes Fingersignal sequentiell nach einem ersten Fingersignal eingegeben wird, und Ausgeben eines Rückwärtsbefehlssignal konfiguriert ist, wenn das zweite Fingersignal oder das erste Fingersignal sequentiell nach dem dritten Fingersignal eingegeben wird.

7. Massagesesselsystem eines druckempfindlichen Typs nach Anspruch 6, wobei die erste Befehlssignalausgabeeinheit (61) zum Ausgeben eines ersten Intensitätsbefehlssignals, wenn einige von mindestens einem ersten Fingersignal, einem zweiten Fingersignal und einem dritten Fingersignal der linken Hand des Benutzers und Kombinationen davon gleichzeitig eingegeben werden, und Ausgeben eines zweiten Intensitätsbefehlssignals konfiguriert ist, wenn einige von mindestens einem ersten Fingersignal, einem zweiten Fingersignal und einem dritten Fingersignal der rechten Hand des Benutzers und Kombinationen davon gleichzeitig eingegeben werden.

8. Massagesesselsystem eines druckempfindlichen Typs nach Anspruch 1, wobei die Steuereinheit (60) zum Anlegen eines Steuersignals zum Zurücklehnen des Sessels konfiguriert ist, wenn ein Drucksignal an alle Drucksensoreinheiten (S1, S2, S3, S4, S5) angelegt wird, die in dem Sitzteil (10), den Fußstützenteilen (20), dem Rückenlehnenteil (30), den Armlehnenteilen (40) und dem Kopfstützenteil (50) installiert sind, oder wenn das Drucksignal stark wird.

9. Massagesesselsystem eines druckempfindlichen Typs nach Anspruch 1, wobei die Steuereinheit (60) zum Anlegen eines Steuersignals zum Aufrichten des Sessels konfiguriert ist, wenn ein Drucksignal nicht an die in dem Rückenlehnenteil (30) oder dem Kopflehnenteil (50) installierte Drucksensoreinheit (S3, S5) angelegt wird oder darin schwach wird, während die Drucksignale an die in dem Sitzteil (10), den Fußstützenteilen (20) und den Armlehnenteilen (40) installierten Drucksensoreinheiten (S 1, S2, S4) angelegt werden.

10. Massagesesselsystem eines druckempfindlichen Typs nach Anspruch 3, das ferner eine Schmerzsensoreinheit (66) umfasst, die zum Bestimmen eines von der Mikrofoneinheit während einer Massage angelegten Stöhnsignals als ein Schmerzsignal konfiguriert ist,
wobei die Steuereinheit (60) zum Empfangen des Schmerzsignals von der Schmerzsensoreinheit (66) und Anlegen eines Massageintensitätssteuersignals konfiguriert ist, um eine Intensität einer Massage einzustellen.

## Revendications

1. Système de fauteuil de massage de type à perception de pression comprenant :
des unités de perception de pression (S1, S2, S3, S4, S5) installées dans l'une quelconque ou plusieurs d'au moins une partie de siège (10), des parties de repose-pieds (20), une partie de dossier (30), des parties d'accoudoirs (40), une partie d'appui-tête (50), et des combinaisons de celles-ci, et configurées pour détecter une mouvement de l'un quelconque ou plusieurs d'au moins les hanches, les pieds, le dos, les mains, la tête d'un utilisateur et des combinaisons de ceux-ci, ou un changement du centre de gravité d'un utilisateur ;
une première unité d'émission de signal de commande (61) configurée pour recevoir des signaux de pression de l'unité de perception de pression (S1, S2, S3, S4, S5) et faire correspondre les signaux de pression reçus avec des premières informations de correspondance de commande entrées en avance pour émettre en sortie un premier signal de commande correspondant aux premières informations de correspondance de commande ;
une unité de commande (60) configurée pour recevoir le premier signal de commande de la première unité de sortie de signal de commande (61) et appliquer l'un quelconque ou plusieurs d'au moins un signal de commande de siège pour commander la partie de siège (10), un signal de commande de repose-pieds pour commander la partie de repose-pieds (20), un signal de commande de dossier pour commander la partie de dossier (30), un signal de commande d'accoudoirs pour commander les parties d'accoudoirs (40), un signal de commande d'appui-tête pour commander la partie d'appui-tête (50), et des combinaisons de ceux-ci ; **caractérisé en ce que** le système comprend en outre :
une unité de détection d'heure de début de commande (64) configurée pour détecter une heure de début d'entrée de commande, dans lequel l'heure de début d'entrée de commande détectée par l'unité de détection d'heure de début de commande (64) est un point temporel « corps-MARCHE-tête-ARRÊT » auquel le signal de pression n'est pas généré dans l'unité de perception de pression (S5) installée dans la partie d'appui-tête (50), tandis que les signaux de pression sont générés dans les unités de perception de pression (S1, S2, S3, S4) installées dans la partie de siège (10), les parties de repose-pieds (20), la partie de dossier (30), et les parties d'accoudoirs (40), ou l'heure de début d'entrée de commande détectée par l'unité de détection d'heure de début de commande est un point d'entrée simultané dans le temps auquel au moins deux des signaux de pression ou plus sont simultanément entrés.

2. Système de fauteuil de massage de type à perception de pression selon la revendication 1, dans lequel les signaux de pression sont distingués par une quelconque ou plusieurs parmi une position d'un signal, une force d'un signal, une heure d'entrée d'un signal, un nombre d'entrées consécutives d'un signal, une combinaison de signaux consécutifs, et des combinaisons de ceux-ci, et les premières informations de correspondance de commande comprennent des informations sur l'une quelconque ou plusieurs d'au moins des informations de commande pour chaque position de signal qui peut correspondre au signal de pression, des informations de commande pour chaque force de signal, des informations de commande pour chaque heure d'entrée de signal, des informations de commande pour chaque nombre d'entrées de signal consécutives, des informations de commande pour chaque combinaison de signal continu, et des combinaisons de celles-ci.

3. Système de fauteuil de massage de type à perception de pression selon la revendication 1, comprenant en outre :
une unité de microphone (M) configurée pour détecter une voix d'un utilisateur ou un son réalisé par un utilisateur ;
une deuxième unité d'émission de signal de commande (62) configurée pour recevoir un signal vocal de l'unité de microphone (M) et faire correspondre le signal vocal avec des deuxièmes informations de correspondance entrées en avance de commande pour émettre en sortie un deuxième signal de commande correspondant aux deuxièmes informations de correspondance de commande ; et
une unité de génération d'informations de phrase de commande (63) configurée pour combiner le premier signal de commande et le deuxième signal de commande pour générer des informations de phrase de commande dans lesquelles le premier signal de commande est considéré comme un mot contextuel objectif et le deuxième signal de commande est considéré comme un mot contextuel de commande d'opération incluant l'un quelconque ou plusieurs d'un mot verbal, un mot adjectival, un mot adverbial et des combinaisons de ceux-ci,
dans lequel l'unité de commande (60) est configurée pour appliquer un quelconque ou plusieurs d'au moins un signal de commande de siège pour commander la partie de siège (10), un signal de commande de repose-pieds pour commander la partie de repose-pieds (20), un signal de commande de dossier pour commander la partie de dossier (30), un signal de commande d'accoudoirs pour commander les parties d'accoudoirs (40), un signal de commande d'appui-tête pour commander la partie d'appui-tête (50), et des combinaisons de ceux-ci selon les informations de phrase de commande.

4. Système de fauteuil de massage de type à perception de pression selon la revendication 1, comprenant en outre une unité de détection d'heure de fin d'entrée de commande (65) configurée pour détecter une heure de fin d'entrée de commande,
dans lequel l'heure de fin d'entrée de commande détectée par l'unité de détection d'heure de fin de commande (65) est un point temporel « corps-MARCHE-tête-ARRÊT » auquel le signal de pression est généré dans l'unité de perception de pression (S5) installée dans la partie d'appui-tête, (50) tandis que les signaux de pression sont générés dans les unités de perception de pression (S1, S2, S3, S4) installées dans la partie de siège (10), les parties de repose-pieds (20), la partie de dossier (30), et les parties d'accoudoirs (40), ou un point d'entrée simultané dans le temps auquel au moins deux des signaux de pression ou plus sont simultanément entrés.

5. Système de fauteuil de massage de type à perception de pression selon la revendication 1, dans lequel la première unité de sortie de signal de commande (61) est configurée pour émettre en sortie un signal de commande de massage sur tout le corps lorsqu'au moins deux des signaux de pression ou plus sont simultanément générés.

6. Système de fauteuil de massage de type à perception de pression selon la revendication 1, dans lequel les unités de perception de pression (S1, S2, S3, S4, S5) comprennent l'un quelconque ou plusieurs d'au moins une première unité de perception de doigt (S41) correspondant à un premier doigt de l'utilisateur, une deuxième unité de perception de doigt (S42) correspondant à un deuxième doigt de l'utilisateur, une troisième unité de perception de doigt (S43) correspondant à un troisième doigt de l'utilisateur, une quatrième unité de perception de doigt, une cinquième unité de perception de doigt, des combinaisons de celles-ci, et la première unité de sortie de signal de commande (61) est configurée pour émettre en sortie un signal de commande vers l'avant lorsqu'un deuxième signal de doigt ou un troisième signal de doigt est séquentiellement entré en suivant un premier signal de doigt, et émettre en sortie un signal de commande vers l'arrière lorsque le deuxième signal de doigt ou le premier signal de doigt est séquentiellement entré en suivant le troisième signal de doigt.

7. Système de fauteuil de massage de type à perception de pression selon la revendication 6, dans lequel la première unité d'émission de signal de commande (61) est configurée pour émettre en sortie un premier signal de commande d'intensité lorsque certains d'au moins un premier signal de doigt, un deuxième signal de doigt, et un troisième signal de doigt de la main gauche de l'utilisateur et des combinaisons de ceux-ci sont simultanément entrés, et émettre en sortie un deuxième signal de commande d'intensité lorsque certain d'au moins un premier signal de doigt, un deuxième signal de doigt et un troisième signal de doigt de la main droite de l'utilisateur et des combinaisons de ceux-ci sont simultanément entrés.

8. Système de fauteuil de massage de type à perception de pression selon la revendication 1, dans lequel l'unité de commande (60) est configurée pour appliquer un signal de commande pour incliner le fauteuil lorsqu'un signal de pression est appliqué à toutes les unités de perception de pression (S1, S2, S3, S4, S5) qui sont installées dans la partie de siège (10), les parties de repose-pieds (20), la partie de dossier (30), les parties d'accoudoirs (40), et la partie d'appui-tête (50), ou quand le signal de pression devient fort.

9. Système de fauteuil de massage de type à perception de pression selon la revendication 1, dans lequel l'unité de commande (60) est configurée pour appliquer un signal de commande pour maintenir le fauteuil de manière verticale lorsqu'un signal de pression n'est pas appliqué ou est affaibli dans l'unité de perception de pression (S3, S5) installée dans la partie de dossier (30) ou la partie d'appui-tête (50) tandis que les signaux de pression sont appliqués aux unités de perception de pression (S1, S2, S4) installées dans la partie de siège (10), les parties de repose-pieds (20) et les parties d'accoudoirs (40).

10. Système de fauteuil de massage de type à perception de pression selon la revendication 3, comprenant en outre une unité de perception de douleur (66) configurée pour déterminer un signal de gémissement, lorsqu'il est appliqué depuis l'unité de microphone pendant un massage, comme un signal de douleur,
dans lequel l'unité de commande (60) est configurée pour recevoir le signal de douleur à partir de l'unité de perception de douleur (66) et appliquer un signal de commande d'intensité de massage pour ajuster une intensité d'un massage.
